# EUROPEAN PATENT APPLICATION

(11) **EP 4 582 854 A1**
(43) Date of publication of application: **09.07.2025**
(21) Application number: 25150198.7
(22) Date of filing: 03.01.2025
(51) Int. Cl.: G02B 27/10, G02B 27/14, G02B 6/27

(54) **BEAM SPLITTER AND OPTICAL POWER MONITORING SYSTEM**

(30) Priority: 04.01.2024 CN 202410018234
(71) Applicant: Jabil Technology (Wuhan) Ltd., Wuhan, Hubei 430223 (CN)
(72) Inventor: ZHANG, Qiling, Wuhan, Hubei, 430223 (CN); LIAO, Lei, Wuhan, Hubei, 430223 (CN); PENG, Jiyu, Wuhan, Hubei, 430223 (CN)
(74) Representative: Gulde & Partner

(57) **Abstract**

The present disclosure provides a beam splitter (110), comprising a beam-splitting layer (103), an anti-reflective layer (101) and a reflection suppression layer (102); the beam-splitting layer (103) is located on a side of incident surface of the beam splitter (110), and configured to change an optical path of a part of the incident light rays; the anti-reflective layer (101) is located on a side of exiting surface of the beam splitter (110), and configured to reduce light reflection of incident light rays entering the beam splitter (110); and the reflection suppression layer (102) is located on a reflection path of reflected light rays that are reflected by the anti-reflective layer (101), and configured to suppress the reflected light rays that are reflected by the anti-reflective layer (101).

## Description

### TECHNICAL FIELD

The present disclosure relates to the field of optoelectronics technology, and in particular to a beam splitter and an optical power monitoring system.

### BACKGROUND

A beam splitter is an optical element for dividing a light beam into light beams of different wavelengths or directions, thereby realizing applications such as spectral analysis, optical measurement, and optical signal processing.

Since a beam splitter is generally made of optical glass or an optical thin film, light reflection is inevitable during use of the beam splitter; therefore, a traditional large-angle beam splitter may introduce polarization dependent loss (PDL) during beam-splitting, leading to changes in the polarization state of output light beams, which may introduce waveguide dispersion loss (WDL) during transmission of light.

### SUMMARY

Embodiments of the present disclosure provide a beam splitter and an optical power monitoring system.

According to one aspect of the disclosure, a beam splitter comprises a beam-splitting layer, an anti-reflective layer and a reflection suppression layer; the beam-splitting layer is located on a side of an incident surface of the beam splitter, and configured to change an optical path of a part of incident light rays; the anti-reflective layer is located on a side of an exiting surface of the beam splitter, and configured to reduce light reflection of incident light rays entering the beam splitter; and the reflection suppression layer is located on a reflection path of reflected light rays reflected by the anti-reflective layer, and configured to suppress the reflected light rays reflected by the anti-reflective layer.

According to one aspect of the disclosure, a thickness of the beam splitter enables the reflection suppression layer to be located on the reflection path of the reflected light rays reflected by the anti-reflective layer.

According to one aspect of the disclosure, the beam-splitting layer is a beam-splitting film attached to the incident surface of the beam splitter.

According to one aspect of the disclosure, the beam-splitting film is a Non-Polarizing Reflector (NPR) film.

According to one aspect of the disclosure, the beam-splitting layer is a layer structure with a beam-splitting function and integrated at the incident surface of the beam splitter.

According to one aspect of the disclosure, the reflection suppression layer is a diffuse reflection layer.

According to one aspect of the disclosure, the diffuse reflection layer is a frosted target surface in the beam splitter; and the target surface is located on an optical path of reflected light rays of the exiting surface.

According to one aspect of the disclosure, the diffuse reflection layer is a target surface to which a diffuse reflection material is attached in the beam splitter; and the target surface is located on an optical path of reflected light rays of the exiting surface.

According to one aspect of the disclosure, the reflection suppression layer is a light-absorbing layer.

According to one aspect of the disclosure, the light-absorbing layer is a target surface to which a light-absorbing material is attached in the beam splitter.

According to one aspect of the disclosure, the reflection suppression layer is a diffuse reflection layer to which a light-absorbing material is attached.

According to one aspect of the disclosure, the anti-reflective layer is an anti-reflective (AR) coating.

According to one aspect of the disclosure, the beam splitter comprises the incident surface, the exiting surface and a bottom surface located between the incident surface and the exiting surface, and the reflection suppression layer is located at the bottom surface.

According to one aspect of the disclosure, the incident surface and the exiting surface are parallel to each other.

According to one aspect of the disclosure, a cross section of the beam splitter is a parallelogram, the incident surface and the exiting surface correspond to two oblique sides of the parallelogram respectively, and the reflection suppression layer corresponds to a base side of the parallelogram.

According to one aspect of the disclosure, the beam splitter has a beam-splitting parameter, and the beam-splitting parameter is used to adjust beam-splitting capability of the beam splitter.

According to one aspect of the disclosure, the beam-splitting parameter includes at least one of: a material of the beam splitter, a grating structure of the beam splitter, a type and a thickness of a material attached to the surface of the beam splitter, and an incident angle of the beam splitter.

According to another aspect of the disclosure, an optical power monitoring system is provided, the optical power monitoring system comprises an incident light module, a beam splitter and a monitoring module; the incident light module is used to generate multiple channels of incident light rays; the beam splitter is arranged behind the incident light module and comprises a beam-splitting layer and a reflection suppression layer; the beam-splitting layer is used to change the optical path of a part of the incident light rays; and the reflection suppression layer is used to suppress reflected light rays that are reflected toward the interior of the beam splitter; and the monitoring module is arranged on a path of the part that is changed by the beam splitter of the incident light rays, and configured to perform multi-channel optical power monitoring.

According to another of the disclosure, an optical power monitoring system is provided, the system comprises a beam splitter as described in any aspect of the above, an incident light module, and a monitoring module; the incident light module is used to generate multiple channels of incident light rays; the beam splitter is arranged behind the incident light module, and configured to change an optical path of a part of the incident light rays; and the monitoring module is arranged on a reflection path of a part reflected by the beam splitter of the incident light rays, and configured to perform multi-channel optical power monitoring.

According to one aspect of the disclosure, the monitoring module comprises a lens array and a photoelectric sensor array; wherein the lens array is used to transmit the light rays reflected by the beam splitter into the photoelectric sensor array for performing multi-channel optical power monitoring.

### BRIEF DESCRIPTION OF DRAWINGS

The accompanying drawings, which are incorporated hereby and constitute a part of the description, illustrate embodiments compatible with the present disclosure, and serve to explain the principles of the present disclosure with the description.
FIG. 1 shows a structural schematic diagram of a beam splitter provided by an exemplary embodiment of the present disclosure;
FIG. 2 shows a structural schematic diagram of a beam splitter provided by an exemplary embodiment of the present disclosure;
FIG. 3 shows a structural schematic diagram of an optical power monitoring system in related techniques; and
FIG. 4 shows a structural schematic diagram of an optical power monitoring system provided by an exemplary embodiment of the present disclosure.

### DETAILED DESCRIPTION

Exemplary embodiments will be described in detail herein, examples of which are illustrated in the figures. When the following description refers to the figures, the same reference numbers in different figures indicate the same or similar elements unless otherwise indicated. The implementations described in the following exemplary embodiments do not represent all of the implementations compatible with the present disclosure. Instead, they are merely examples of devices and methods compatible with aspects of the present disclosure as illustrated in detail in the appended claims.

It should be understood that the term "several" means one or more, and the term "a plurality of' means two or more than two as mentioned herein. The term "and/or" describes the association relationship of associated objects, indicating that there can be three relationships, for example, A and/or B can include the following three situations: A alone, A and B together, and B alone. The character "/" generally indicates that the objects associated therewith before and after are in an "or" relationship.

The present disclosure provides a beam splitter, which can be applied in an optoelectronic system, for dividing a light beam that is input into the beam splitter into light beams with different wavelengths or directions, and reducing polarization dependence loss and waveguide dispersion loss caused by reflected light rays during use. The beam splitter of the present disclosure will now be described in detail with reference to the accompanying drawings as follows.

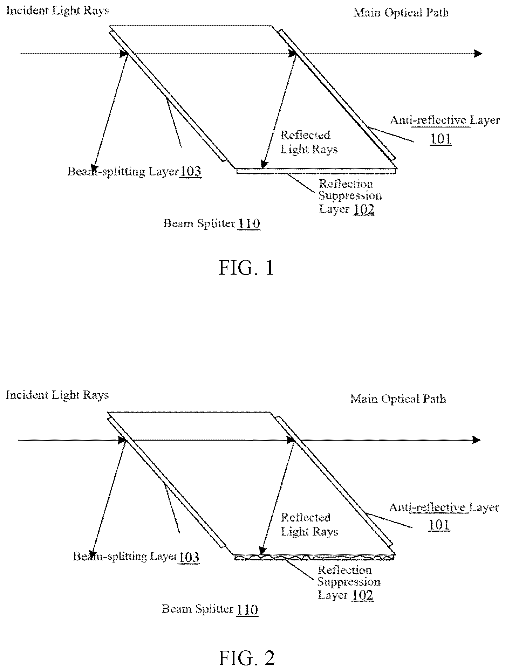

FIG. 1 shows a structural schematic diagram of a beam splitter provided by an exemplary embodiment of the present disclosure, as shown in FIG. 1, the beam splitter 110 comprises a beam-splitting layer 103, an anti-reflective layer 101 and a reflection suppression layer 102.

The beam-splitting layer 103 is located on the side of incident surface of the beam splitter 110, for changing the optical path of a part of incident light rays.

The anti-reflective layer 101 is located on the side of exiting surface of the beam splitter 110, for reducing light reflection of the incident light rays entering the beam splitter 110.

The reflection suppression layer 102 is located on the reflection path of the reflected light rays that are reflected by the anti-reflective layer 101, for suppressing the reflected light rays that are reflected by the anti-reflective layer 101.

The surfaces in the beam splitter can be named as "incident surface" and "exiting surface" based on the transmission path of light rays that pass through the beam splitter; wherein the incident surface refers to a surface where light rays enter the beam splitter from an external medium of the beam splitter, and the exiting surface refers to a surface where light rays exit the beam splitter and enter an external medium of the beam splitter. The incident surface of the beam splitter 110 is used to realize the beam-splitting function of the beam splitter. In an embodiment of the present disclosure, the beam splitter 110 changes the optical path of a part of the incident light rays by means of the beam-splitting layer 103 on the side of incident surface, thereby implementing the beam-splitting function; in addition, in order to reduce the loss caused by light reflection inside the beam splitter, an anti-reflective layer 101 is arranged on the side of exiting surface of the beam splitter 110, the anti-reflective layer 101 can reduce reflection of the light rays entering the beam splitter 110; further, the reflection of light rays can be reduced by the anti-reflective layer 101 but cannot be totally avoided, a small amount of light reflection may occur on the side of exiting surface of the beam splitter 110, that is, there are reflected light rays that are reflected by the anti-reflective layer 101, in order to reduce interference of this part of the reflected light rays to the optical path of other light rays and reduce loss, a reflection suppression layer 102 is arranged on the reflection path of the reflected light rays of the anti-reflective layer 101, and the reflection suppression layer 102 is used to suppress the reflected light rays that are reflected by the anti-reflective layer 101.

In summary, by arranging a beam-splitting layer on the side of incident surface of the beam splitter, an anti-reflective layer on the side of exiting surface for reducing light reflection of incident light rays, and a reflection suppression layer on the reflection path of the reflected light rays that are reflected by the anti-reflective layer for suppressing the reflected light rays, the beam splitter provided by embodiments of the present disclosure can reduce the occurrence of light reflection within the beam splitter while implementing the beam-splitting function, thereby reducing the polarization dependent loss and waveguide dispersion loss caused by the reflected light rays while implementing beam-splitting on the incident light rays.

FIG. 2 shows a structural schematic diagram of a beam splitter provided by an exemplary embodiment of the present disclosure, as shown in FIG. 2, the beam splitter 110 comprises a beam-splitting layer 103, an anti-reflective layer 101 and a reflection suppression layer 102.

The beam-splitting layer 103 is located on the side of incident surface of the beam splitter 110, for changing the optical path of a part of incident light rays.

The anti-reflective layer 101 is located on the side of exiting surface of the beam splitter 110, for reducing light reflection of the incident light rays entering the beam splitter 110.

The reflection suppression layer 102 is located on the reflection path of the reflected light rays that are reflected by the anti-reflective layer 101, for suppressing the reflected light rays that are reflected by the anti-reflective layer 101.

In embodiments of the present disclosure, the beam splitter 110 comprises an incident surface, an exiting surface and a bottom surface that is located between the incident surface and the exiting surface, the reflection suppression layer 102 is located at the bottom surface; wherein the incident surface and the exiting surface are parallel to each other. The thickness of the beam splitter 110 enables the reflection suppression layer 102 to be located on the reflection path of the reflected light rays that are reflected by the anti-reflective layer 101; as shown in FIG. 2, the reflection suppression layer 102 can be arranged on the bottom surface between the incident surface and the exiting surface of the beam splitter 110.

In one embodiment, as shown in FIG. 2, the cross section of the beam splitter 110 takes the shape of a parallelogram, the incident surface and the exiting surface correspond to two oblique sides of the parallelogram, respectively, and the reflection suppression layer corresponds to the base side of the parallelogram.

It should be noted that the beam splitter 110 can be implemented as a solid body with a number of shapes, and its cross section can have a number of forms, such as square or rectangular, circular, prism, cylindrical as well as other customized shapes, etc., correspondingly. Therefore, the shape configuration of the reflection suppression layer 102 can be adapted to the shape configuration of the corresponding plane of the beam splitter 110, for example, in the case of the beam splitter 110 being a cylinder, if the incident surface and the exiting surface are both circular planes of the cylinder, the reflection suppression layer 102 can be disposed on the lateral side of the cylinder and be compatible with the shape of the side of the column.

In an embodiment of the present disclosure, the reflection suppression layer 102 is a diffuse reflection layer; as shown in FIG. 2, the diffuse reflection layer (reflection suppression layer 102) irregularly reflects the reflected light rays that are reflected by the anti-reflective layer 101 based on the principle of diffuse reflection of light rays, and reduces the intensity of the reflected light rays, thereby reducing the interference of the reflected light rays to other light rays. In this case, in one embodiment, the reflection suppression layer 102 is a frosted target surface in the beam splitter 110; the target surface is located on the reflection path of the reflected light rays from the exiting surface. Schematically, the target surface can be a plane between the exiting surface and the incident surface shown in FIG. 2, during production and manufacturing of the beam splitter 110, the target surface can be frosted by a frosting process, such that the target surface has a diffuse reflection function, thereby achieving the diffuse reflection of the light rays reaching the target surface and achieving the effect of light suppression; in another embodiment, the reflection suppression layer 102 can be a target surface attached with a diffuse reflection material, for example, the diffuse reflection material is coated onto the target surface to form a reflection suppression layer, alternatively, the diffuse reflection material is adhered to the target surface to form a reflection suppression layer, etc. The present disclosure is not intended to limit the process of attaching diffuse reflection materials to the target surface; wherein the diffuse reflection materials refer to materials capable of scattering light rays evenly in various directions, such as powdery materials, capillary materials, atomized materials, matte materials and some polymer materials, etc.

In one embodiment, the reflection suppression layer 102 can also be a light-absorbing layer, the reflection suppression layer 102 absorbs the reflected light rays that are reflected by the anti-reflective layer 101 based on the absorption characteristics of light energy by substances, thereby avoiding further reflections of the reflected light rays. In this case, the light-absorbing layer can be a target surface attached with a light-absorbing material in the beam splitter 110. The light rays reaching the target surface are absorbed, so that the effect of light suppression is achieved. Herein, the light-absorbing material refers to a material capable of effectively absorbing light energy, for example, black materials including black paints, carbon blacks and the like, light absorbers, nanomaterials, etc.; the process of attaching light-absorbing materials to the target surface can include, but is not limited to coating, adhering, etc., the present disclosure is not intended to be limiting.

In another embodiment, the reflection suppression layer 102 can be a diffuse reflection layer attached with a light-absorbing material, that is, the reflection suppression layer 102 can utilize the principle of diffuse reflection along with the principle of light absorption to suppress the reflected light rays that are reflected by the side of non-incident surfaces, thereby enhancing the effect of light suppression.

The anti-reflective layer 101 is an optical coating that increases the transmittance of light rays by reducing light reflection, in one embodiment, the anti-reflection layer 101 is an anti-reflective (AR) coating, also known as anti-reflection coating; it can be understood that the anti-reflective layer 101 can also be implemented in other forms with the same or similar functions, for example, an anti-reflective coating of nanostructures that achieves minimum reflection of light in a specific wavelength range can be implemented by controlling the shape and distribution of the nanostructures, the present disclosure is not intended to be limiting.

In one embodiment, the beam-splitting layer 103 is a beam-splitting film that is attached to the incident surface; the process of attaching the beam-splitting film to the incident surface can include, but is not limited to coating, adhering, etc, the present disclosure is not intended to be limiting.

In one embodiment, the beam-splitting film can be a NPR (Non-Polarizing Reflector) film which has non-polarization characteristic; or the beam-splitting film can also be implemented as other film structures with the beam-splitting function, the present disclosure is not intended to be limiting.

The beam splitter 110 has beam-splitting parameters which are used to adjust the beam-splitting capability of the beam splitter, wherein the beam-splitting parameters of the beam splitter include, but are not limited to materials of the beam splitter, the grating structure of the beam splitter, materials and thickness of the surface coating of the beam splitter, and the incident angle of the beam splitter (for example, the incident angle of the beam splitter can be set to 13.5°, 22.5°, 45° and any other alternative degrees), etc. With the setting the above-mentioned beam-splitting parameters, the amount of split light that is split by the beam splitter can be adjusted.

In another embodiment, the beam-splitting layer 103 is a layer structure with a beam-splitting function that is integrated at the incident surface of the beam splitter 110; that is, the beam-splitting function is a material property of the beam splitter 110 itself.

In summary, by arranging a beam-splitting layer on the side of incident surface of the beam splitter, an anti-reflective layer on the side of exiting surface for reducing light reflection of incident light rays, and a reflection suppression layer on the reflection path of the reflected light rays that are reflected by the anti-reflective layer for suppressing the reflected light rays, the beam splitter provided by embodiments of the present disclosure can reduce the occurrence of light reflection within the beam splitter while implementing the beam-splitting function, thereby reducing the polarization dependent loss and waveguide dispersion loss caused by the reflected light rays while implementing beam-splitting on the incident light rays.

The beam splitter provided in the present disclosure can be applied in various optoelectronic systems/application scenarios, such as spectral analysis systems, optical communication systems, optical imaging systems, optical power monitoring systems, etc., the present disclosure is not intended to limit the application of the beam splitter.

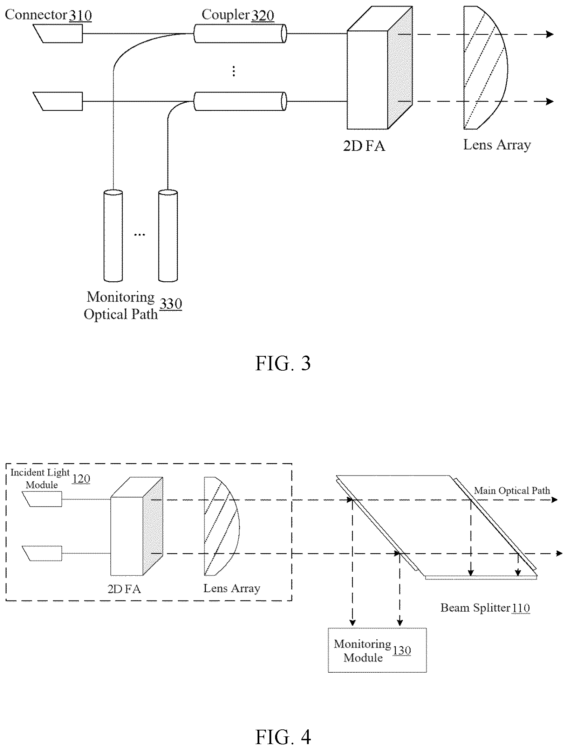

Taking the optical power monitoring system as an example, in related techniques, a coupler is usually used to split 1% or 2% of the light for optical power monitoring, FIG. 3 shows a structural schematic diagram of an optical power monitoring system in related techniques, as shown in FIG. 3, the optical power monitoring system comprises a connector 310, a coupler 320, a monitoring optical path 330 and other components; the connector 310 and the coupler 320 are connected by optical fibers for light transmission, after passing through the coupler 320, the light rays sequentially pass through the two-dimensional focal array (2D FA) and the lens array so as to propagate in the air; wherein the connector 310 is used to transmit light rays, and the coupler 320 is used to split 1% or 2% of the light rays and transmit it to the monitoring optical path 330, such that the monitoring optical path 330 performs optical power monitoring based on received light rays; in the above optical power monitoring system, in the case of monitoring multi-channel optical signals, it is necessary to arrange couplers of the same number as that of the channel of optical signals, leading to the problem of large volume and high loss in the optical power monitoring system that is built based on couplers.

The present disclosure schematically provides an optical power monitoring system using a beam splitter as shown in FIG. 1 or FIG. 2, which reduces the overall size of the system while utilizing the characteristic of loss reduction of the beam splitter, and solves the problem of the impact of reflected light rays on optical power monitoring that is potentially caused by the introduction of the beam splitter; FIG. 4 shows a structural schematic diagram of an optical power monitoring system provided by an exemplary embodiment of the present disclosure, as shown in FIG. 4, the system comprises a beam-splitting layer 110, an incident light module 120 and a monitoring module 130.

The incident light module 120 is used to generate multiple channels of incident light rays.

The beam splitter 110 is arranged behind the incident light module 120 and comprises a beam-splitting layer and a reflection suppression layer; the beam-splitting layer is used to change the optical path of a part of the incident light rays; the reflection suppression layer is used to suppress the reflected light rays that are reflected toward the interior of the beam splitter 110.

The monitoring module 130 is arranged on the path of the part of the incident light rays that is changed by the beam splitter 110, for performing multi-channel optical power monitoring.

Further, in another embodiment, the optical power monitoring system comprises a beam splitter 110, an incident light module 120 and a monitoring module 130.

The incident light module 120 is used to generate multiple channels of incident light rays.

The beam splitter 110 is arranged behind the incident light module 120, for changing the optical path of a part of the incident light rays.

The monitoring module 130 is arranged on the reflection path of the part of the incident light rays that are reflected by the beam splitter 110, for performing multi-channel optical power monitoring.

Wherein the beam splitter 110 is the beam splitter as shown in any one of the embodiments of FIG. 1 or FIG. 2, and will not be described in detail anymore.

The incident light module 120 can consist of a two-dimensional focal array and a lens array, such that the light rays switch from propagating in optical fibers to propagating in the air, thereby generating multiple channels of incident light rays that can be transmitted to the beam splitter 110. The beam splitter 110 changes the optical path of a part of the incident light rays, so as to perform optical power monitoring based on this part of the light rays; the monitoring module 130 is arranged on the transmission path of the light rays whose optical paths are changed by the beam splitter 110, that is, on the reflection path of the part of the incident light rays that are reflected by the beam splitter 110, and the monitoring module 130 performs multi-channel optical power monitoring upon receiving the part of the incident light rays that are reflected by the beam splitter 110 on the side of incident surface.

In one embodiment, the monitoring module 130 can consist of a lens array, a two-dimensional focal array and a photodiode array arranged in sequence, the two-dimensional focal array and the photodiode array are connected to each other by optical fibers, thereby implementing monitoring of optical power.

In another embodiment, the monitoring module comprises a lens array and a photoelectric sensor array.

Herein, the lens array is used to transmit the light rays reflected by the beam splitter into the photoelectric sensor array for performing multi-channel optical power monitoring.

The monitoring module 130 can consist of a lens array and a photoelectric sensor array (for example, a photodiode array), such that the part of the light rays that are reflected by the beam splitter, after having passed through the lens array, are focused into the photoelectric sensor array, so as to convert optical signals into electrical signals by photoelectric sensors in the photoelectric sensor array, thereby implementing the monitoring of optical power by means of the monitoring of electrical signals.

Since the beam splitter 110 is provided with a reflection suppression layer 102, the light rays that are reflected by the anti-reflective layer 101 can be suppressed, thereby reducing the light rays that are reflected into the monitoring module 130 by non-incident surfaces, reducing the impact on optical power monitoring, and improving the effect of optical power monitoring.

In summary, by constructing an optical power monitoring system on the basis of a beam splitter which comprises a beam-splitting layer, an anti-reflective layer that is arranged on the side of exiting surface for reducing light reflection of incident light rays, and a reflection suppression layer that is arranged on the reflection path of the reflected light rays that are reflected by the anti-reflective layer for suppressing the reflected light rays, and arranging a monitoring module on the transmission path of the reflected light rays that are reflected by the beam-splitting layer of the beam splitter for multi-channel monitoring, the optical power monitoring system provided by the present disclosure not only reduces the polarization dependent loss and waveguide dispersion loss caused by reflected light rays, but also reduces the impact of the reflected light rays that are reflected from non-incident surfaces on optical power monitoring, thereby improving the effect of optical power monitoring.

Those skilled in the art would readily come up with other solutions of the present disclosure after taking the description into account and put the disclosure into practice. The present disclosure is intended to encompass any variations, uses, or adaptations thereof, these variations, uses, or adaptations follow the general principles of the present disclosure and include common knowledge or conventional technical means in the art that are not disclosed herein. The description and embodiments are intended to be merely exemplary, and the true scope and spirit of the present disclosure are indicated by the appended claims.

It should be understood that the present disclosure is not limited to the precise structures that have been described above and illustrated in the accompanying drawings, and various modifications and alterations can be made without departing from the scope thereof. The scope of protection of the present disclosure is defined only by the appended claims.

## Claims

1. A beam splitter (110), comprising a beam-splitting layer (103), an anti-reflective layer (101) and a reflection suppression layer (102);
the beam-splitting layer (103) is located on a side of an incident surface of the beam splitter (110), and configured to change an optical path of a part of incident light rays;
the anti-reflective layer (101) is located on a side of an exiting surface of the beam splitter (110), and configured to reduce light reflection of incident light rays entering the beam splitter (110); and
the reflection suppression layer (102) is located on a reflection path of reflected light rays reflected by the anti-reflective layer (101), and configured to suppress the reflected light rays reflected by the anti-reflective layer (101).

2. The beam splitter according to claim 1, wherein a thickness of the beam splitter (110) enables the reflection suppression layer (102) to be located on the reflection path of the reflected light rays reflected by the anti-reflective layer (101).

3. The beam splitter according to claim 1, wherein the beam-splitting layer (103) is a beam-splitting film attached to the incident surface of the beam splitter (110); preferably,
the beam-splitting film is a Non-Polarizing Reflector, abbreviated as NPR, film.

4. The beam splitter according to claim 1, wherein the beam-splitting layer (103) is a layer structure with a beam-splitting function and integrated at the incident surface of the beam splitter (110).

5. The beam splitter according to claim 2, wherein the reflection suppression layer (102) is a diffuse reflection layer; preferably,
the diffuse reflection layer is a frosted target surface in the beam splitter (110), and the target surface is located on an optical path of reflected light rays of the exiting surface; or
the diffuse reflection layer is a target surface to which a diffuse reflection material is attached in the beam splitter (110), and the target surface is located on an optical path of reflected light rays of the exiting surface.

6. The beam splitter according to claim 2, wherein the reflection suppression layer (102) is a light-absorbing layer; preferably,
the light-absorbing layer is a target surface to which a light-absorbing material is attached in the beam splitter (110).

7. The beam splitter according to claim 5, wherein the reflection suppression layer (102) is a diffuse reflection layer to which a light-absorbing material is attached.

8. The beam splitter according to claim 1, wherein the anti-reflective layer (101) is an anti-reflective, abbreviated as AR, coating.

9. The beam splitter according to claim 1, wherein the beam splitter (110) comprises the incident surface, the exiting surface and a bottom surface located between the incident surface and the exiting surface, and the reflection suppression layer (102) is located at the bottom surface.

10. The beam splitter according to claim 1 or 9, wherein the incident surface and the exiting surface are parallel to each other.

11. The beam splitter according to claim 10, wherein a cross section of the beam splitter (110) is a parallelogram, the incident surface and the exiting surface correspond to two oblique sides of the parallelogram respectively, and the reflection suppression layer (102) corresponds to a base side of the parallelogram.

12. The beam splitter according to claim 1, wherein the beam splitter (110) has a beam-splitting parameter, and the beam-splitting parameter is used to adjust beam-splitting capability of the beam splitter (110);
wherein the beam-splitting parameter comprises at least one of: a material of the beam splitter, a grating structure of the beam splitter, a type and a thickness of a material attached to the surface of the beam splitter, and an incident angle of the beam splitter.

13. An optical power monitoring system, comprising an incident light module (120), a beam splitter (110) and a monitoring module (130);
the incident light module (120) is used to generate multiple channels of incident light rays;
the beam splitter (110) is arranged behind the incident light module (120), and comprises a beam-splitting layer and a reflection suppression layer; the beam-splitting layer is used to change an optical path of a part of the incident light rays; and the reflection suppression layer is used to suppress reflected light rays reflected toward the interior of the beam splitter (110); and
the monitoring module (130) is arranged on a path of the part changed by the beam splitter (110) of the incident light rays, and configured to perform multi-channel optical power monitoring.

14. An optical power monitoring system, comprising a beam splitter (110) according to any one of claims 1 to 12, an incident light module (120) and a monitoring module (130);
the incident light module (120) is used to generate multiple channels of incident light rays;
the beam splitter (110) is arranged behind the incident light module (120), and configured to change an optical path of a part of the incident light rays; and
the monitoring module (130) is arranged on a reflection path of a part reflected by the beam splitter (110) of the incident light rays, and configured to perform multi-channel optical power monitoring.

15. The optical power monitoring system according to claim 14, wherein the monitoring module (130) comprises a lens array and a photoelectric sensor array;
wherein the lens array is used to transmit the light rays that are reflected by the beam splitter (110) into the photoelectric sensor array for performing multi-channel optical power monitoring.
